# EUROPEAN PATENT APPLICATION

(11) **EP 3 438 947 A1**
(43) Date of publication of application: **06.02.2019**
(21) Application number: 17775511.3
(22) Date of filing: 31.03.2017
(51) Int. Cl.: G08G 1/16, B60R 21/00

(54) **MONITORING DEVICE AND MONITORING METHOD**

(30) Priority: 31.03.2016 JP 2016072888
(71) Applicant: Furukawa Electric Co., Ltd., Chiyoda-ku Tokyo 100-8322 (JP); Furukawa Automotive Systems Inc., Inukami-gun, Shiga 522-0242 (JP)
(72) Inventor: YOSHIKAWA, Toru, Inukami-gun Shiga 522-0242 (JP); KUBO, Yosuke, Inukami-gun Shiga 522-0242 (JP)
(74) Representative: Horn Kleimann Waitzhofer Patentanwälte PartG mbB
(86) International application number: PCT/JP2017/013515
(87) International publication number: WO 2017/170979

(57) **Abstract**

[OBJECT] To surely detect a target existing around a host vehicle when the vehicle is moved back.

[ORGANIZATION] A monitoring device that monitors a state around a vehicle includes: a transmitting/receiving part (other vehicle detecting parts 11a, 11b) that transmits an electromagnetic wave to receive a reflected wave from a target; a detecting part (arithmetic processing part 13) that detects the target existing in a rear area including an area directly behind the vehicle and the target existing in rear left and right sides of the vehicle, by referring to the reflected wave received from the target by the transmitting/receiving part; and a determining part (arithmetic processing part 13) that determines whether or not there is a possibility of contact or collision between the target detected by the detecting part and the vehicle.

## Description

### Technical Field

The present invention relates to a monitoring device and a monitoring method.

### Background Art

In the art disclosed in Patent Document 1, after the distance from and the direction of a target is detected using a radar as a range finding means, the distance and the direction are mapped in an orthogonal coordinate space by coordinate transformation, whereby a coordinate value is calculated, and in a case where the target is within a predetermined alarm area around the host vehicle, an alarm is given to alert a driver.

Further, in the art disclosed in Patent Document 2, it is determined whether or not a target has entered a predetermined area in a detection area behind the host vehicle, and when it is determined that the target has entered the predetermined area, notification is stopped.

### Prior Art Document

### Patent Document

Patent Document 1: Japanese Patent Application Laid-open No. 2003-215241
Patent Document 2: WO2013/046246

### Disclosure of the Invention

### Problems to be Solved by the Invention

However, the art disclosed in Patent Document 1 has a problem that, when the vehicle is moved back in, for example, a parking area or the like, it is not possible to surely detect other vehicles approaching from various directions and moving across behind the host vehicle, an obstacle present behind the host vehicle, and so on.

Further, the art disclosed in Patent Document 2 has a problem that, when the vehicle is moved back, it is not possible to detect a stationary target existing directly behind the host vehicle or a moving target approaching from directly behind.

It is an object of the present invention to provide a monitoring device and a monitoring method capable of surely detecting a target existing around the host vehicle when the vehicle is moved back.

### Means for Solving the Problems

To solve the aforesaid problems, the present invention is a monitoring device that monitors a state around a vehicle, the monitoring device characterized by including: a transmitting/receiving part that transmits an electromagnetic wave to receive a reflected wave from a target; a detecting part that detects the target existing in a rear area including an area directly behind the vehicle and the target existing in rear left and right sides of the vehicle, by referring to the reflected wave received from the target by the transmitting/receiving part; and a determining part that determines whether or not there is a possibility of contact or collision between the target detected by the detecting part and the vehicle.

Such a configuration enables the sure detection of a target existing around the host vehicle when the vehicle is moved back.

Further, the present invention is characterized by including a warning part that gives a warning when the determining part determines that the contact or the collision between the target and the vehicle will occur.

Such a configuration makes it possible to surely notify a user of the possibility of the contact or the collision with the target.

Further, the present invention is characterized in that the determining part sets at least two collision determination lines extending rearward in terms of a traveling direction of the vehicle from vicinities of left and right ends of a rear portion of the vehicle and the collision determination line which extends along the rear portion of the vehicle in a direction perpendicular to the traveling direction, and determines whether or not the target will intersect with any of the three collision determination lines.

Such a configuration makes it possible to more surely determine the possibility of the contact or the collision between the target and the host vehicle.

Further, the present invention is characterized in that: the detecting part detects the target existing in a detection area located behind the vehicle and having a rectangular shape whose longitudinal direction is the direction perpendicular to the traveling direction of the vehicle and in the four detection areas each having a sector shape whose radius has a length substantially half the length of a side in the longitudinal direction of the detection area having the rectangular shape and whose center is substantially a midpoint of the longitudinal-direction side; and the determining part determines whether or not the target existing in the detection area having the rectangular shape or in any of the four detection areas having the sector shape will intersect with any of the collision determination lines.

Such a configuration makes it possible to surely detect a target approaching the host vehicle from various directions.

Further, the present invention is characterized in that the collision determination lines are each extended/contracted according to a speed of the vehicle.

Such a configuration makes it possible to give an appropriate warning according to the speed of the vehicle.

Further, the present invention is a monitoring method of monitoring a state around a vehicle, the monitoring method characterized by including: a transmitting/receiving step of transmitting an electromagnetic wave to receive a reflected wave from a target; a detecting step of detecting the target existing in a rear area including an area directly behind the vehicle and the target existing in rear left and right sides of the vehicle, by referring to the reflected wave received from the target in the transmitting/receiving step; and a determining step of determining whether or not there is a possibility of contact or collision between the target detected in the detecting step and the vehicle.

Such a method makes it possible to surely detect a target existing around the host vehicle when the vehicle is moved back.

### Effect of the Invention

According to the present invention, it is possible to provide a monitoring device and a monitoring method capable of surely detecting a target existing around a host vehicle when the vehicle is moved back.

### Brief Description of Drawings

Fig. 1 is a diagram illustrating a configuration example of a monitoring device in an embodiment of the present invention.
Fig. 2 is an explanatory view of an operation at the time of normal traveling in the embodiment illustrated in Fig. 1.
Fig. 3 is an explanatory view of an operation at the time of reverse movement in the embodiment illustrated in Fig. 1.
Fig. 4 is another explanatory view of the operation at the time of the reverse movement in the embodiment illustrated in Fig. 1.
Fig. 5 is an explanatory view of an operation at the time of reverse movement in an oblique direction in the embodiment illustrated in Fig. 1.
Fig. 6 is an explanatory flowchart of an example of processing executed in the embodiment illustrated in Fig. 1.
Fig. 7 is another explanatory view of an operation at the time of the reverse movement in the embodiment illustrated in Fig. 1.
Fig. 8 is an explanatory view of another embodiment of the present invention.

### Modes for Carrying out the Invention

Next, an embodiment of the present invention will be described.

### (A) Explanation of Configuration of Embodiment

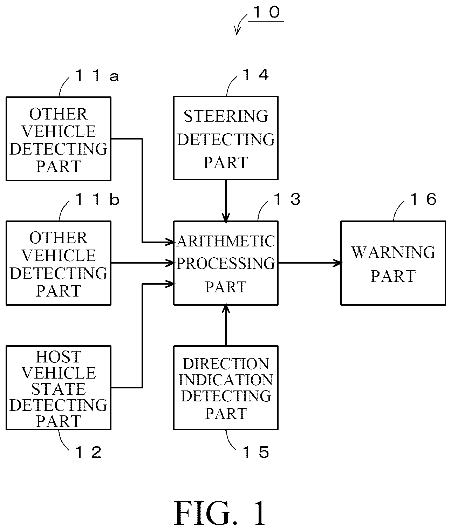

Fig. 1 is a diagram illustrating a configuration example of a monitoring device according to the embodiment of the present invention. As illustrated in this drawing, the monitoring device 10 includes, as main constituent elements, other vehicle detecting parts 11a, 11b, a host vehicle state detecting part 12, an arithmetic processing part 13, a steering detecting part 14, a direction indication detecting part 15, and a warning part 16.

Here, the other vehicle detecting parts 11a, 11b are each constituted by, for example, a radar device or the like that irradiates another vehicle with a radio wave and from its reflected wave, detects the position, speed, and so on of the other vehicle. The other vehicle detecting part 11a is disposed, for example, on a rear left side of a vehicle, and the other vehicle detecting part 11b is disposed, for example, on a rear right side of the vehicle. Further, observation areas (areas in which a target can be observed) of the respective other vehicle detecting part 11a and other vehicle detecting part 11b are set so as to be in contact with or overlap with each other at their end portions on a rearward side of the host vehicle C.

The host vehicle state detecting part 12 is constituted by, for example, a vehicle speed sensor, a yaw-axis sensor, a sensor that detects a state of a transmission, or the like, and it detects a traveling state of the host vehicle to notify the detected state to the arithmetic processing part 13.

The arithmetic processing part 13 detects a four-wheeled vehicle or a two-wheeled vehicle traveling behind and determines whether or not there is a possibility of contact or collision, based on information supplied from the other vehicle detecting parts 11a, 11b, the host vehicle state detecting part 12, the steering detecting part 14, and the direction indication detecting part 15, and when determining that there is a possibility of the contact or the like, gives a warning through the warning part 16. Further, the arithmetic processing part 13 detects an obstacle existing behind the host vehicle when the host vehicle is to be parked in a parking area or the like, determines whether or not there is a possibility of contact or the like with the obstacle, and when determining that there is a possibility of the contact or the like, gives a warning through the warning part 16.

The warning part 16 is constituted by, for example, a speaker which makes a warning sound, LED (Light Emitting Diode) which blinks on and off, or the like, and alerts a driver by making the warning sound when the arithmetic processing part 13 determines that there is a possibility of the collision or contact.

### (B) Explanation of Operation of Embodiment of Present Invention

Next, operations of the embodiment of the present invention will be described. The embodiment of the present invention has at least two operation modes: an advance-time operation mode where a target existing behind is detected when the host vehicle advances; and a reverse-time operation mode where a target existing behind is detected at the time of the reverse movement. In each of the operation modes, detection areas where to detect another vehicle or the like existing behind are set, another vehicle or the like existing in any of the detection areas is detected, it is determined whether or not the detected other vehicle will come into contact or collide with the host vehicle, and when it is determined that the contact or the like will occur, the warning part 16 gives a warning to alert the driver.

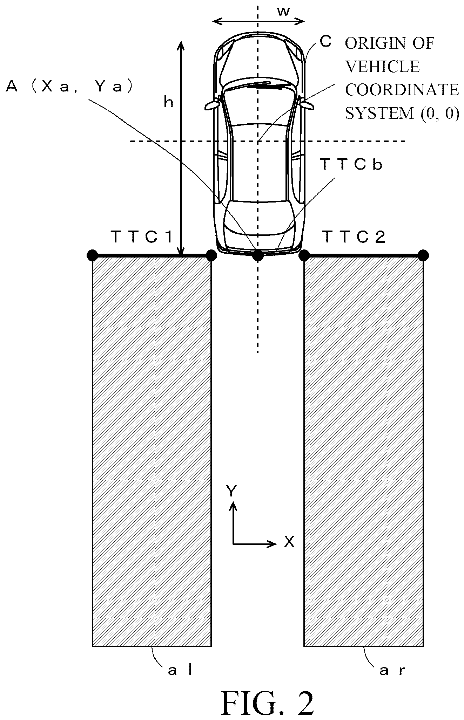

Fig. 2 is a view illustrating an example of detection areas where to detect a target existing behind the host vehicle C in the advance-time operation mode. In Fig. 2, the whole width of the host vehicle C is w and its whole length is h. Further, the center of the vehicle C is an origin (0, 0) of an orthogonal coordinate system. Further, behind the host vehicle C, detection areas al, ar are set, and on front portions of the respective areas, TTC1, TTC2 (Time to Collision) are set as collision determination lines. When the host vehicle C is advancing, the arithmetic processing part 13 sets the detection areas al, ar having a rectangular shape as illustrated in Fig. 2 behind the vehicle. Note that the detection areas illustrated in Fig. 2 are set by the arithmetic processing parts 13 through arithmetic processing, in the observation areas which are areas where to observe a target by the two other vehicle detecting parts 11a, 11b illustrated in Fig. 1.

Note that these detection areas al, ar are detection areas where to detect other vehicles traveling on traffic lanes adjacent to a traffic lane on which the host vehicle C is traveling. In a case where the other vehicle detected by the other vehicle detecting part 11a, 11b exists in the detection area al, ar, the arithmetic processing part 13 detects the position and speed of the other vehicle and determines whether or not the other vehicle will intersect with TTC1, TTC2. Then, when it is determined that it will intersect, the warning part 16 gives the warning if the driver operates a steering wheel or operates a direction indicator in an attempt to move toward the lane where the other vehicle is traveling.

In more detail, the arithmetic processing part 13 gives the warning through the warning part 16 in a case where the steering detecting part 14 detects that the driver operates the steering handle for moving to the lane where the other vehicle is traveling or in a case where the direction indication detecting part 15 detects that the driver operates the direction indicator toward the lane where the other vehicle is traveling. This can avoid the contact or collision of the host vehicle C with the vehicle behind.

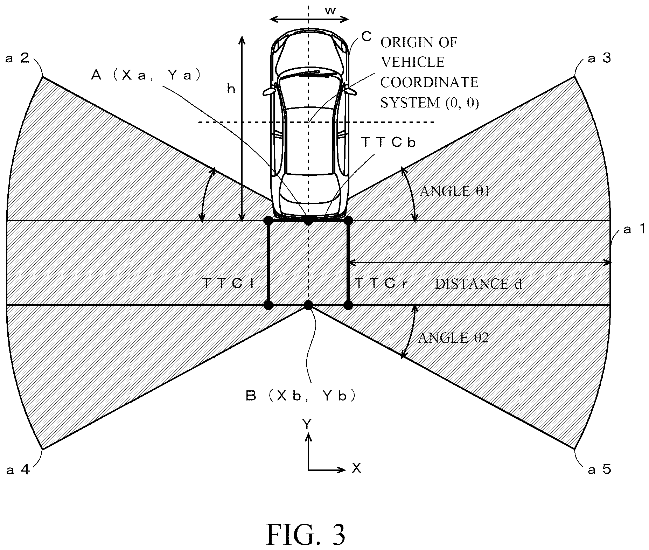

Next, Fig. 3 is a view illustrating an example of detection areas where to detect a target existing behind the host vehicle C in the reverse-time operation mode. In more detail, Fig. 3 is a view illustrating an example of detection areas in a case where the host vehicle C moves back in, for example, a parking area or the like. In a case where the arithmetic processing part 13 determines that the transmission of the host vehicle C is set in reverse (rear) by referring to an output of the host vehicle state detecting part 12, the arithmetic processing part 13 changes the setting from the detection areas illustrated in Fig. 2 to the detection areas illustrated in Fig. 3.

In the example in Fig. 3, the detection areas include a detection area a1 located behind the host vehicle C and having a rectangular shape whose longitudinal direction is an X direction (direction perpendicular to the traveling direction of the host vehicle C) (hereinafter, simply referred to as a "rectangular detection area a1") and detection areas a2 to a5 each having a sector shape whose radius has a length substantially half the length of a longitudinal-direction side of the rectangular detection area a1 and whose center is located near the midpoint of the rectangular detection area a1 (hereinafter, simply referred to as "sector-shaped detection areas a2 to a5"). In more detail, the sector-shaped detection area a2 has a sector shape whose center is substantially the midpoint of an upper (upper in Fig. 3) side of the rectangular detection area a1 and whose width gets wider as it goes more apart leftward from the host vehicle C. The sector-shaped detection area a3 has a sector shape whose center is substantially the midpoint of the upper side of the rectangular detection area a1 and whose width gets wider as it goes more apart rightward from the host vehicle C. The sector-shaped detection area a4 has a sector shape whose center is substantially the midpoint of a lower (lower in Fig. 3) side of the rectangular detection area a1 and whose width gets wider as it goes more apart leftward from the host vehicle C. The sector-shaped detection area a5 has a sector shape whose center is substantially the midpoint of the lower side of the rectangular detection area a1 and whose width gets wider as it goes more apart rightward from the host vehicle C.

The left half of the rectangular detection area a1 and the sector-shaped detection areas a2, a4 are set in the observation area of the other vehicle detecting part 11a illustrated in Fig. 1, and the right half of the rectangular detection area a1 and the sector-shaped detection areas a3, a5 are set in the observation area of the other vehicle detecting part 11b illustrated in Fig. 1. Further, in the advance-time operation mode illustrated in Fig. 2, the detection areas al, ar are independent areas not overlapping with each other, but in the reverse-time operation mode illustrated in Fig. 3, the left half of the rectangular detection area a1 and the sector-shaped detection areas a2, a4 are set to be partly in contact or overlap with the right half of the rectangular detection area a1 and the sector-shaped detection areas a3, a5. As previously described, the end portions of the observation areas of the other vehicle detecting part 11a and the other vehicle detecting part 11b are set to be in contact or overlap with each other behind the host vehicle C and accordingly, an area directly behind the host vehicle C is covered by an area in the vicinity of the center of the detection area a1 as illustrated in Fig. 3. In a case where the end portions of the observation areas of the other vehicle detecting part 11a and the other vehicle detecting part 11b overlap with each other, one of the other vehicle detecting part 11a and the other vehicle detecting part 11b is set as a master and the other is set as a slave, and pieces of information obtained from their overlapping observation areas are prioritized, which can prevent a processing speed from lowering due to redundant processing and prevent the occurrence of erroneous detection.

The coordinates of the centers of the sector-shaped detection areas a2, a3 are A(Xa, Xa) and the coordinates of the centers of the sector-shaped detection areas a4, a5 are B(Xb, Xb). Further, central angles of the sector-shaped detection areas a2, a3 are θ1 and central angles of the sector-shaped detection areas a4, a5 are θ2. Note that θ1 and θ2 are set to, for example, 30°. Further, a distance d from a right end of the rectangular detection area a1 up to TTCr and a distance d from a left end of the rectangular detection area a1 up to TTCl are set to, for example, 3 m.

Behind the vehicle C, there are set TTCb (Time to Collision) as a collision determination line extending in the X direction and having substantially the same length as the whole width w of the host vehicle C and TTCl, TTCr as two collision determination lines extending rearward in the Y direction from left and right ends of a rear portion of the vehicle C. Note that the length of TTCl, TTCr is set to, for example, substantially the same as the whole width w of the host vehicle C. Of course, they may be set to a length other than this.

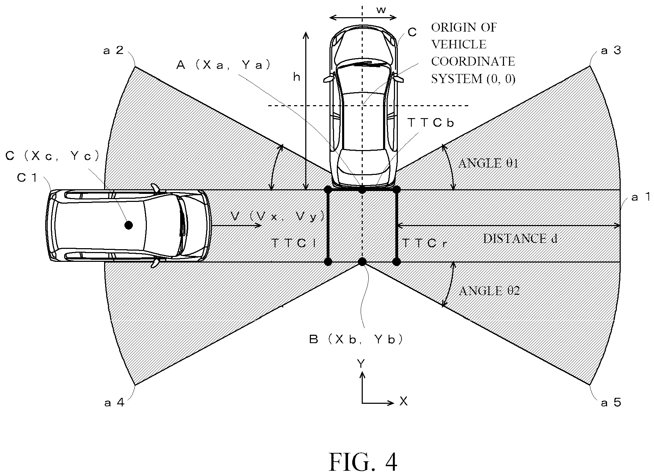

Suppose that, for example, another vehicle C1 approaches the host vehicle C from the left side as illustrated in Fig. 4 in a state where the detection areas and the collision determination lines illustrated in Fig. 3 are set. In such a case, the arithmetic processing part 13 refers to outputs of the other vehicle detecting parts 11a, 11b to detect that the other vehicle C1 exists in the detection area (in the example in Fig. 4, in the rectangular detection area a1).

When detecting that the other vehicle C1 exists in the detection area, the arithmetic processing part 13 detects a position C(Xc, Yc) and a relative speed V(Vx, Vy) of the other vehicle C1. Then, by referring to the detected position C(Xc, Yc) and relative speed V(Vx, Vy) of the other vehicle C1, the arithmetic processing part 13 determines whether or not there is a possibility that the other vehicle C1 intersects with any of TTCb, TTCl, TTCr. Then, in a case where there is a possibility of the intersection, the arithmetic processing part 13 gives a warning through the warning part 16 to alert the driver. In more detail, from the position C(Xc, Yc) and the relative speed V(Vx, Vy) of the other vehicle C1, a time T up to an instant when the other vehicle C1 intersects with TTCb, TTCl, TTCr is found, and in a case where this time T is smaller than a TTC set time, it is determined that there is a high possibility of the intersection. Note that the TTC set time can be, for example, about two seconds. In the case of T < TTC set time, the arithmetic processing part 13 gives the warning through the warning part 16. Since the driver, as a result, can be notified that the other vehicle C1 is approaching, he/she is capable of avoiding the contact or collision with the other vehicle C1 by returning an accelerator pedal or operating a brake pedal. Incidentally, examples of a warning method include a method of lighting (or blinking) LED disposed on a side mirror or a rearview mirror and a method of making a warning sound from a speaker. Incidentally, the timing for stopping the warning can be, for example, when the vehicle stops or when the target goes out of the detection area.

As described above, according to the embodiment of the present invention, in the case where it is determined that the other vehicle C1 is in any of the detection areas a1 to a5 and will intersect with any of TTCb, TTC1, TTCr when the host vehicle C is going to move back or is moving back in, for example, a parking area or the like, the warning is given from the warning part 16, which makes it possible to avoid the contact or collision with the other vehicle C1. In particular, at the time of the reverse movement in, for example, a parking area or the like while not-illustrated other vehicles are standing still side by side on the left and right, the other vehicle C1 approaching the host vehicle C may be in a blind spot and cannot be seen due to the other vehicles standing still on the left or right, but even in such a case, it is possible to avoid the contact or collision with the other vehicle C1.

Further, in this embodiment, since the observation areas of the respective other vehicle detecting parts 11a, 11b are disposed such that their end portions behind the vehicle are in contact or overlap with each other as illustrated in Fig. 3, the area directly behind the host vehicle C can be the detection area. This makes it possible to surely detect a target existing directly behind the host vehicle C.

Further, in this embodiment, since TTCb, TTCl, TTCr being the three collision determination lines are set and it is determined whether or not the other vehicle C1 will intersect with any of these, it is possible to surely detect the other vehicle C1 approaching from various directions or a stationary obstacle, unlike at the advance time. Further, in this embodiment, since it is determined, from the position and speed of the other vehicle, whether or not the other vehicle will intersect with any of the collision determination lines and the warning is given in the case where the other vehicle will intersect, the warning is not given in a case where there is a low possibility of the collision, which makes it possible to reduce unnecessary warnings. For example, in the art disclosed in Patent Document 2, since the warning is given in the case where a target exists in the notification target area, the warning is given even in a case where the other vehicle is standing still and there is no possibility of the collision. In this embodiment, on the other hand, the warning is not given in a case where the other vehicle is standing still and will not intersect with any of the collision determination lines, which makes it possible to prevent an unnecessary warning.

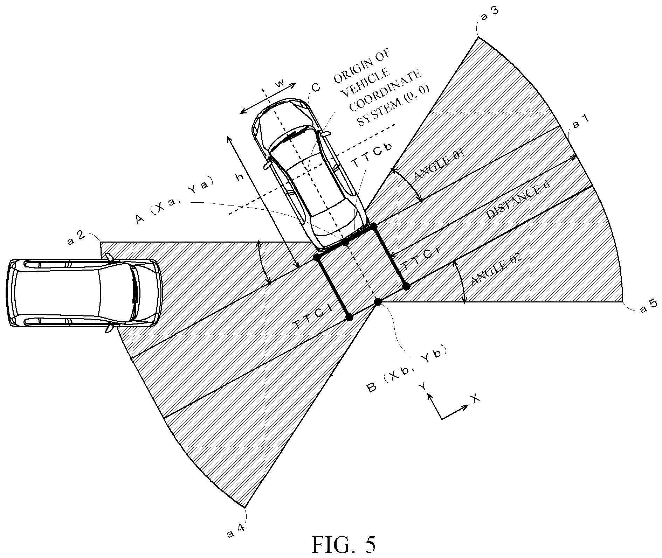

Further, in this embodiment, the sector-shaped detection areas a2, a3 partly reaching the front side of the vehicle are set as illustrated in Fig. 4, which makes it possible to surely detect the other vehicle C1 approaching from a lateral direction even when the vehicle C obliquely moves back as illustrated in, for example, Fig. 5.

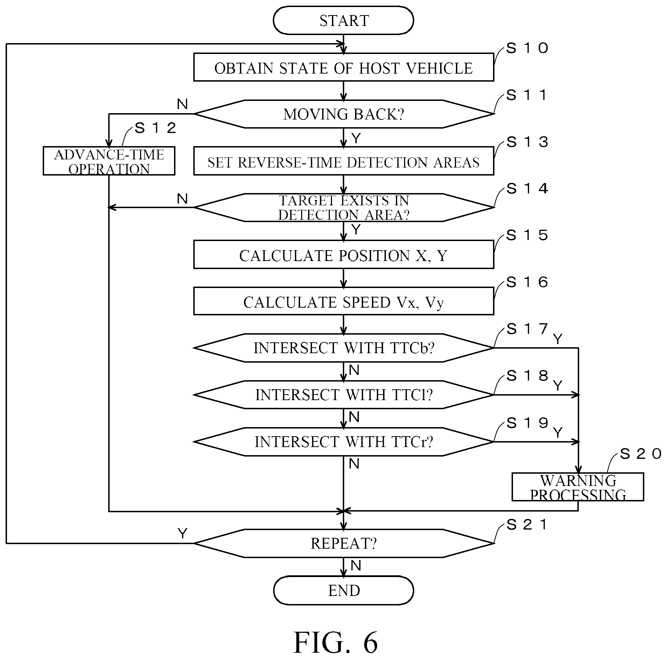

Next, details of processing executed in the embodiment illustrated in Fig. 1 will be described with reference to Fig. 6. When the processing of the flowchart illustrated in Fig. 6 is started, the following steps are executed.

At Step S10, the arithmetic processing part 13 refers to an output of the host vehicle state detecting part 12 to obtain the state of the host vehicle C. For example, the arithmetic processing part 13 obtains information such as the vehicle speed and the state of the transmission output from the host vehicle state detecting part 12.

At Step S11, the arithmetic processing part 13 determines whether or not the host vehicle C is in a reverse state, and in the case of the reverse state (Step S11: Yes), goes to Step S13, and otherwise (Step S11: No), goes to Step S12. For example, in a case where the transmission is set in reverse (rear), the arithmetic processing part 13 determines as Yes to go to Step S13. Alternatively, in a case where a parking brake is released while the vehicle is standing still and the vehicle is moved back, it also determines as Yes to go to Step S13.

At Step S12, the arithmetic processing part 13 executes the operation for the case where the host vehicle C advances. In more detail, the arithmetic processing part 13 sets the detection areas illustrated in Fig. 2, detects another vehicle traveling on a traffic lane adjacent to a traffic lane on which the host vehicle C is traveling, and in a case where there is a possibility that the other vehicle intersects with TTC1, TTC2, it executes the operation of giving the warning when the host vehicle C tries to make a lane change to the traffic lane on which the other vehicle is traveling (executes the advance-time operation mode).

At Step S13, the arithmetic processing part 13 sets the reverse-time detection areas. In more detail, it sets the detection areas a1 to a5 illustrated in Fig. 3 to enter the reverse-time operation mode.

At Step S14, the arithmetic processing part 13 refers to information supplied from the other vehicle detecting parts 11a, 11b to determine whether or not a target exists in any of the detection areas, and when determining that the target exists in any of the detection areas (Step S14: Yes), goes to Step S15, and otherwise, goes to Step S21. For example, in a case where the other vehicle C1 being the target exists in the rectangular detection area a1 as illustrated in Fig. 4, it determines as Yes to go to Step S15.

At Step S15, the arithmetic processing part 13 calculates the position (X, Y) of the target detected at Step S14. In more detail, the arithmetic processing part 13 calculates the position C(X, Y) of the other vehicle C1 illustrated in Fig. 4 as, for example, a coordinate point on an orthogonal coordinate system whose origin is the center of the host vehicle C.

At Step S16, the arithmetic processing part 13 calculates the speed (Vx, Vy) of the target detected at Step S14. In more detail, the arithmetic processing part 13 calculates the speed (Vx, Vy) of the other vehicle C1 illustrated in Fig. 4.

At Step S17, the arithmetic processing part 13 determines whether or not the target will intersect with TTCb, and in a case where it will intersect (Step S17: Yes), goes to Step S20, and otherwise (Step S17: No), goes to Step S18. In more detail, it determines whether or not the target will intersect with TTCb, using X, Y, Vx, Vy of the target which are found by the above processing.

At Step S18, the arithmetic processing part 13 determines whether or not the target will intersect with TTCl, and when determining that it will intersect (Step S18: Yes), goes to Step S20, and otherwise (Step S18: No), goes to Step S19. In more detail, it determines whether or not the target will intersect with TTCl, using X, Y, Vx, Vy of the target which are found by the above processing.

At Step S19, the arithmetic processing part 13 determines whether or not the target will intersect with TTCr, and when determining that it will intersect (Step S19: Yes), goes to Step S20, and otherwise (Step S19: No), goes to Step S21. In more detail, it determines whether or not the target will intersect with TTCr, using X, Y, Vx, Vy of the target which are found by the above processing.

At Step S20, the arithmetic processing part 13 gives the warning through the warning part 16 to alert the driver.

At Step S21, the arithmetic processing part 13 determines whether to repeat the processing or not, and when determining to repeat the processing (Step S21: Yes), returns to Step S10 to repeat the same processing as in the above-described case, and otherwise (Step S21: No), ends the processing.

According to the above-described flowchart, it is possible to achieve the operations previously described with reference to Fig. 1.

### (D) Explanation of Modification Embodiments

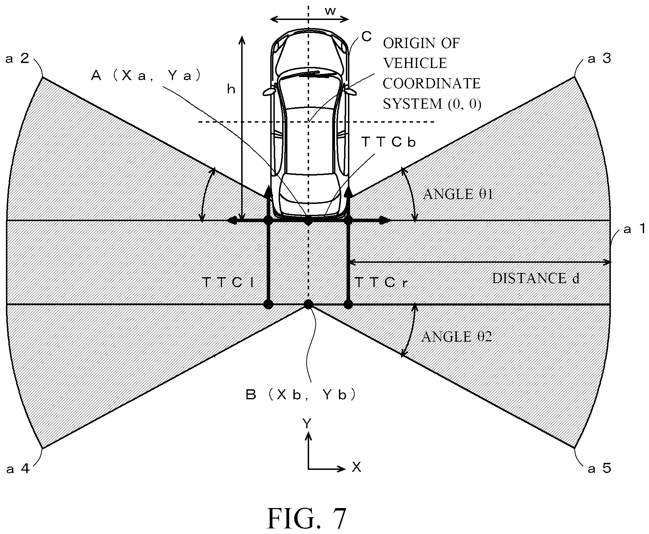

The above embodiment is only an example, and it goes without saying that the present invention is not limited to the above-described cases. For example, in the above-described embodiment, TTCb, TTCl, TTCr are set according to the whole width of the vehicle C and the width in the short-side direction of the rectangular detection area a1 as illustrated in Fig. 3, but for example, as illustrated in Fig. 7, they may be extended/contracted in the arrow directions according to, for example, the speed or the like of the host vehicle C. In more detail, in the example in Fig. 7, TTCl, TTCr are set to extend/contract in the forward direction of the vehicle according to, for example, the vehicle speed, and TTCb is set to extend/contract in the width direction of the vehicle C according to, for example, the vehicle speed. If TTCb, TTCl, TTCr are set to extend/contract in this manner, by, for example, making TTCb, TTCl, TTCr longer when the host vehicle C is moving back at a high speed than when it is moving back at a low speed, it is possible to more surely detect the possibility of the contact with the other vehicle C1.

Further, in the above-described embodiment, the three TTCb, TTCl, TTCr are set, but for example, only TTCb or only TTCl and TTCr may be set.

Further, the detection areas in the case of the normal traveling are described, taking Fig. 2 as an example, but there may be other detection areas.

Further, in the above-described embodiment, in Fig. 3, the angles θ1, θ2 are about 30° and the distance d is 3 m, but the angle or the distance may be set to another value.

Further, the sizes of the detection areas a1 to a5 are fixed, but the sizes of the detection areas a1 to a5 may be changed according to, for example, the traveling speed or the like of the host vehicle C. For example, the sizes of the detection areas may be increased in accordance with an increase in the speed of the host vehicle C.

Further, in the above-described embodiment, the description is given, taking the case where the other vehicle C1 being the target is moving, as an example, but it goes without saying that the present invention is applicable even to a case where the target is standing still.

Further, the condition under which the warning is given may be changed according to the kind of a target. An example of a possible configuration is that, in a case where the target is a vehicle, its position and speed are found and it is determined whether or not the target will intersect with any of TTCb, TTCl, TTCr being the collision determination lines as previously described, and in a case where the target is a person, not only the aforesaid determination on whether or not the target will intersect with any of TTCb, TTCl, TTCr being the collision determination lines is made but also, for example, determination on whether or not the target exists in any of the rectangular detection area a1 and the sector-shaped detection areas a2 to a5 is made, and in a case where the person exists in any of these detection areas, the warning is given. This method can surely prevent the collision with the person or prevent the person from being involved.

Further, in the flowchart illustrated in Fig. 6, the determination is made based only on the state at the current point in time, but with a history of information in the past being stored, the determination may be made based on the history. This method can prevent the occurrence of erroneous determination even if a state of a parking area or the like suddenly changes.

Further, in the above-described embodiment, in the case where it is determined that there is a possibility of the contact or collision with a target, the warning part 16 gives the warning, but for example, the host vehicle C may be braked by automatic braking or the like.

Further, in the above-described embodiment, the observation areas that the other vehicle detecting parts 11a, 11b have are set such that their end portions are in contact or overlap with each other behind the host vehicle C, and in the case where they overlap with each other, the observation areas that the other vehicle detecting parts 11a, 11b have are prioritized, and the information observed in the higher-priority observation area is used preferentially, but another possible example is that, as for the overlapping observation areas, arithmetic processing different from that for a non-overlapping observation area is executed and higher-accuracy information is generated by collating pieces of information observed in the respective observation areas.

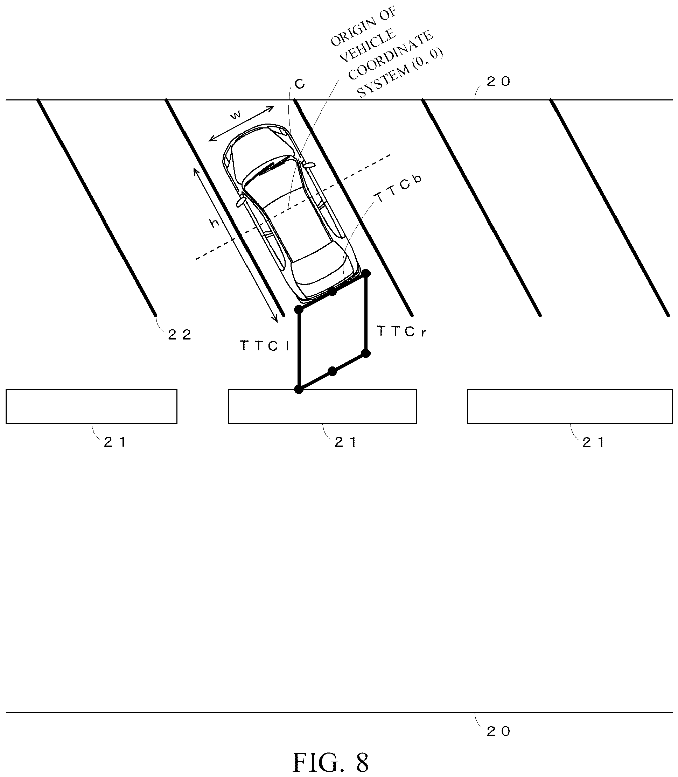

Further, in the above-described embodiment, TTCl, TTCr as the collision determination lines are set so as to be parallel to the front-rear direction of the vehicle, but TTCl, TTCr may be set so as to be oblique to the front-rear direction of the vehicle. For example, in a case where parking lines 22 are drawn obliquely to a shoulder of a road 20 having center lines 21 as illustrated in Fig. 8, TTCl, TTCr as the collision determination lines may be set in a direction perpendicular to the road 20 as illustrated in Fig. 8. Incidentally, a method of such an oblique setting may be, for example, to detect the direction of the road 20 when the host vehicle is traveling on the road 20 and store the direction, or to estimate the direction using a parked vehicle. The oblique setting is achieved by adjusting the angle of TTCl, TTCr based on an angle difference from the stored or estimated direction when the vehicle is to be parked. Alternatively, this is achieved by detecting a traveling direction of another vehicle traveling in parallel to the center lines 21 and the angle of the host vehicle and adjusting the angle of TTCl, TTCr to an angle perpendicular to the other vehicle. Incidentally, it is possible to set TTCl, TTCr to a more optimum angle by finding an average traveling direction from a plurality of traveling vehicles or parked vehicles and adjusting the angle of TTCl TTCr to an angle perpendicular to the average traveling direction. Further, in the case where the host vehicle moves back, a rudder angle may be detected by a rudder angle sensor and the angle and length of TTCl, TTCr may be adjusted based on the detected direction (reverse direction).

### Explanation of Reference Signs

- 10: monitoring device
- 11a, 11b: other vehicle detecting part
- 12: host vehicle state detecting part
- 13: arithmetic processing part
- 14: steering detecting part
- 15: direction indication detecting part
- 16: warning part

## Claims

1. A monitoring device that monitors a state around a vehicle, the monitoring device comprising:
a transmitting/receiving part that transmits an electromagnetic wave to receive a reflected wave from a target;
a detecting part that detects the target existing in a rear area including an area directly behind the vehicle and the target existing in rear left and right sides of the vehicle, by referring to the reflected wave received from the target by the transmitting/receiving part; and
a determining part that determines whether or not there is a possibility of contact or collision between the target detected by the detecting part and the vehicle.

2. The monitoring device according to claim 1, comprising a warning part that gives a warning when the determining part determines that the contact or the collision between the target and the vehicle will occur.

3. The monitoring device according to claim 1 or 2, wherein the determining part sets at least two collision determination lines extending rearward in terms of a traveling direction of the vehicle from vicinities of left and right ends of a rear portion of the vehicle and the collision determination line which extends along the rear portion of the vehicle in a direction perpendicular to the traveling direction, and determines whether or not the target will intersect with any of the three collision determination lines.

4. The monitoring device according to claim 3, wherein:
the detecting part detects the target existing in a detection area located behind the vehicle and having a rectangular shape whose longitudinal direction is the direction perpendicular to the traveling direction of the vehicle and in the four detection areas each having a sector shape whose radius has a length substantially half the length of a side in the longitudinal direction of the detection area having the rectangular shape and whose center is substantially a midpoint of the longitudinal-direction side; and
the determining part determines whether or not the target existing in the detection area having the rectangular shape or in any of the four detection areas having the sector shape will intersect with any of the collision determination lines.

5. The monitoring device according to claim 3 or 4, wherein the collision determination lines are each extended/contracted according to a speed of the vehicle.

6. A monitoring method of monitoring a state around a vehicle, the monitoring method comprising:
a transmitting/receiving step of transmitting an electromagnetic wave to receive a reflected wave from a target;
a detecting step of detecting the target existing in a rear area including an area directly behind the vehicle and the target existing in rear left and right sides of the vehicle, by referring to the reflected wave received from the target in the transmitting/receiving step; and
a determining step of determining whether or not there is a possibility of contact or collision between the target detected in the detecting step and the vehicle.
